# EUROPEAN PATENT SPECIFICATION

(11) **EP 4 540 491 B1**
(45) Date of publication and mention of the grant of the patent: **20.05.2026**
(21) Application number: 23730456.3
(22) Date of filing: 01.06.2023
(51) Int. Cl.: E21B 33/038, E21B 41/10, F16L 1/26, E21B 33/043

(54) **GUIDE ROD**
FÜHRUNGSSTAB
TIGE DE GUIDAGE

(30) Priority: 14.06.2022 NO 20220673
(43) Date of publication of application: 23.04.2025
(73) Proprietor: TECHNIPFMC NORGE AS, 3610 Kongsberg (NO)
(72) Inventor: SUNDQVIST, Gøran, 3601 Kongsberg (NO); MOLDESTAD, Lasse, 3601 Kongsberg (NO)
(74) Representative: Murgitroyd & Company
(86) International application number: PCT/EP2023/064694
(87) International publication number: WO 2023/241934

(56) References cited:
- GB-A- 2 085 990
- US-A- 4 386 659
- US-A- 5 259 459

## Description

### Technical Field

The present disclosure relates to a guide rod and a combination of the guide rod and a receptacle. More particularly, the present disclosure relates to a guide rod, for guiding two subsea components together, the guide rod being able to be both inserted and locked into a receptacle on one of the two subsea components. The guide rod, being locked onto a receptacle on one of the two subsea components, may be used for guiding the other subsea component in relation to the subsea component.

### Background

Guide rods are used for guiding one subsea component relative to another subsea component. For example, guide rods may be used for installing a blow out preventer, BOP, onto the wellhead. The guide rods are attached to the subsea component, for example a foundation for the wellhead, by being inserted and locked into receptacles on the subsea component. GB2085990A discloses a guide for connecting a riser to a wellhead.

One problem is how to lock the guide rod into the receptacle. The guide rod should be able to take up large forces. Locking the guide rod into the receptacle on a subsea component must allow the guide rod to withstand very large forces, sometimes up to several hundred tons. The guide rod, and the locking of the guide rod, should be able to take up at least some of the forces, that normally would go through the wellhead, out into a foundation structure.

A further problem is that any guide rod should be able to work with existing systems. A guide rod should be able to connect to different well equipment. A guide rod must be suitable for remote operation subsea, and must be suitable for guiding subsea components.

It is also desirable to provide a guide rod that is inexpensive to manufacture, is easy to manufacture and assemble, and is robust and reliable. The guide rod should also be able to provide a good and reliable operation of being locked into the receptacle and for subsequent installation of subsea components.

The present disclosure is directed to overcoming one or more of the problems as set forth above. GB2085990 may be useful for understanding the background.

### Summary of the Invention

It is an object of the present invention to provide a guide rod and a combination of the guide rod with the receptacle. This object can be achieved by the features as defined by the independent claims. Further enhancements are characterised by the dependent claims.

According to one embodiment, a guide rod, for guiding two subsea components together, is disclosed. The guide rod 10 is able to be both inserted and locked into a receptacle 20 on one 30 of the two subsea components. The guide rod comprises an element 100, a wedge 200, a cone 300, and a mechanism 400 for moving the wedge 200. The element 100 being substantially hollow and cylindrical, the element 100 comprising a first circumferential shoulder 110 towards a first end 102, a second circumferential shoulder 120 towards an opposite second end 104, and a plurality of openings 130, each opening 130 extending radially through the element 100 and extending axially along the element 100 opening up the element 100 from the first end 102 to, and including, the second circumferential shoulder 120, the plurality of openings 130 forming elongate flexible sections 140 of the element 100, and extending through the first circumferential shoulder 110. The wedge 200 is inside the element 100 and substantially cylindrical and comprising a cone shaped section 210, the wedge 200 is restricted from rotating relative to the element 100 and comprising an end 202 being outside of the element 100. The cone 300 is connected to the end 202 of the wedge 200, and the cone 300 is cone shaped with a vertex 310 pointing away from the element 100. The mechanism 400 is for moving the wedge 200 axially relative to the element 100 in an insertion direction 50, and opposite the insertion direction 50, of the guide rod.

According to one embodiment, the mechanism 400 may be configured to move the wedge 200 in the insertion direction 50 and thereby move the cone 300 in the insertion direction 50 and at the same time move the elongate flexible sections 140 outward with the wedge 200. The mechanism 400 may configured to move the wedge 200 opposite the insertion direction 50 and thereby move the cone 300 towards and over at least a part of the elongate flexible sections 140 thereby forcing the elongate flexible sections 140 inwards and at the same time move the wedge 200 to allow the elongate flexible sections 140 to move inwards.

According to one embodiment, the element 100 may be configured to have no internal stress when the elongate flexible sections 140 have been moved to their outmost position with the wedge 200.

According to one embodiment, the element 100 may comprise an inner cone shaped surface 150, an outer cone shaped surface 160, and an inner straight section 170. The outer cone shaped surface 160 may be at the first end 102 of the element 100 facing the direction of insertion 50, the inner straight section 170 may be towards the second end 104 of the element 100, and the inner cone shaped surface 150 may be, viewed in the axial direction, between the outer cone shaped surface 160 and the inner straight section 170.

According to one embodiment, the first circumferential shoulder 110 may comprise a first truncated cone shaped surface 112, and the second circumferential shoulder 120 may comprise a second truncated cone shaped surface 122, the first truncated cone shaped surface 112 and the second truncated cone shaped surface 122 facing each other.

According to one embodiment, the cone 300 may comprise a hollow space 330 for at least a part of the elongate flexible sections 140 of the element 100. The cone 300 may comprise an inner cone shaped surface 340 that is always around at least a part of the elongate flexible sections 140 to allow the inner cone shaped surface 340 to force the elongate flexible sections 140 together in the hollow space 330. A base 320 of the cone 300 may have a diameter that is smaller than a largest diameter of the element 100.

According to one embodiment, the mechanism 400 may comprise an internal thread 410 interacting with an external thread 250 on, or connected to, the wedge 200.

According to one embodiment, the wedge 200 may comprise a straight section 220, a middle section 230, the cone shaped section 210, and an end section (240). A diameter of the straight section 220 may be constant and is larger than a diameter of the middle section 230. The diameter of the middle section 230 may be larger than a diameter of the end section 240. The cone shaped section 210 may have a base diameter that corresponds to the diameter of the middle section 230 and a vertex diameter that corresponds to the diameter of the end section 240. The end section 240 may comprise the end 202 of the wedge 200.

According to one embodiment, the plurality of openings 130 may extend axially along the element 100 from the first end 102, through the first circumferential shoulder 110, through the second circumferential shoulder 120, and beyond the second circumferential shoulder 120.

According to one embodiment, a cover is arranged on the cone 300 to prevent debris to enter into the cone 300.

According to one embodiment, the guide rod may further comprise an elongate guiding member 700, the guiding member 700 being hollow with a drive shaft 710 inside for the mechanism 400 and the guide member 700 being part of, or axially connected to, the element 100.

According to one embodiment, a combination of the guide rod 10 according to any one of the preceding embodiments and the receptacle 20 on one 30 of the two subsea components is disclosed. The receptacle 20 comprises a substantially hollow cylinder 500 with a first circumferential shoulder 510 of the receptacle 20 and a second circumferential shoulder 520 of the receptacle 20. The first circumferential shoulder 510 of the receptacle 20 and the second circumferential shoulder 520 of the receptacle 20 may be complementary in shape to engage the first circumferential shoulder 110 and the second circumferential shoulder 120, respectively. An inner diameter of the hollow cylinder 500 may be smaller than an outer diameter of the second circumferential shoulder 120.

According to one embodiment, the hollow cylinder 500, the first circumferential shoulder 510 of the receptacle 20, and the second circumferential shoulder 520 of the receptacle 20 may be fitted in form to the element 100 with the first circumferential shoulder 110 and the second circumferential shoulder 120.

According to one embodiment, the combination may be configured such that when the guide rod 10 is locked in the receptacle 20 then there is no clearance between the two.

According to one embodiment, the combination may be configured such that when the guide rod 10 is locked in the receptacle 20 then the element 100 and the receptacle are free from stress from each other due to the locking.

One or more embodiments disclosed herein provide a guide rod that locks the guide rod into the receptacle. The guide rod according to one or more embodiments is able to take up large forces, and does not by the locking of the guide rod to the structure create, transmit, large forces onto the subsea component on which it is placed when the guide rod is locked into the receptacle on the subsea component. There may be some forces by the locking of the guide rod as it may be positioned with some tension to prevent slack in the connection. One or more embodiments disclosed herein provide a guide rod that is able to take up forces that normally would go through the wellhead. Hereby forces would go through from the guide rod, via the locking system according to the invention, to the subsea structure, for example, the foundation and into the ground and not affect the wellhead. This would allow the BOP to lock onto the guide rods, and therethrough have the possibility to limit the forces on the wellhead and rather have the forces taken up by the guide rods to the foundation structure. This would require the BOP to lock onto the guide rod, and such a solution is not part of this invention.

At least one embodiment provides a guide rod that may connect to different well equipment, is suitable for remote operation subsea, and is suitable for guiding subsea components. At least one embodiment provides a guide rod that is inexpensive to manufacture, is easy to manufacture and assemble, and is robust and reliable. The guide rod according to one or more embodiments provides a good and reliable operation of being locked into the receptacle and for subsequent installation of subsea components.

At least one of the above embodiments provides one or more solutions to the problems and disadvantages with the background art. Other technical advantages of the present disclosure will be readily apparent to one skilled in the art from the following description and claims. Various embodiments of the present application obtain only a subset of the advantages set forth. No one advantage is critical to the embodiments. Any embodiment disclosed herein may be technically combined with any other embodiment(s) disclosed herein.

### Brief Description of the Drawings

The accompanying drawings illustrate presently exemplary embodiments of the disclosure, and together with the general description given above and the detailed description of the embodiments given below, serve to explain, by way of example, the principles of the disclosure.
FIGs 1 and 2 are a diagrammatic illustration of an exemplary embodiment of a guide rod;
FIGs 3 and 4 are a diagrammatic illustration along an axial cut of the exemplary embodiment of the guide rod according to FIGs 1 and 2, respectively; and

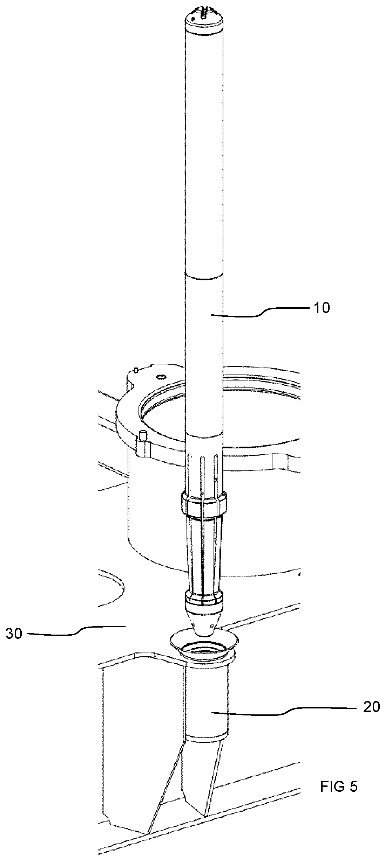

FIG 5 is a diagrammatic illustration of an exemplary embodiment of a guide rod, a receptacle and a subsea component.

### Detailed Description

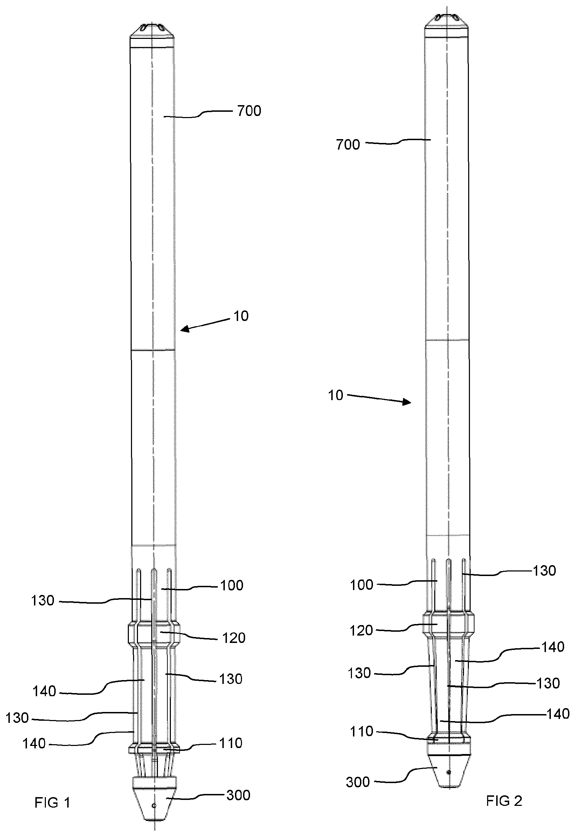

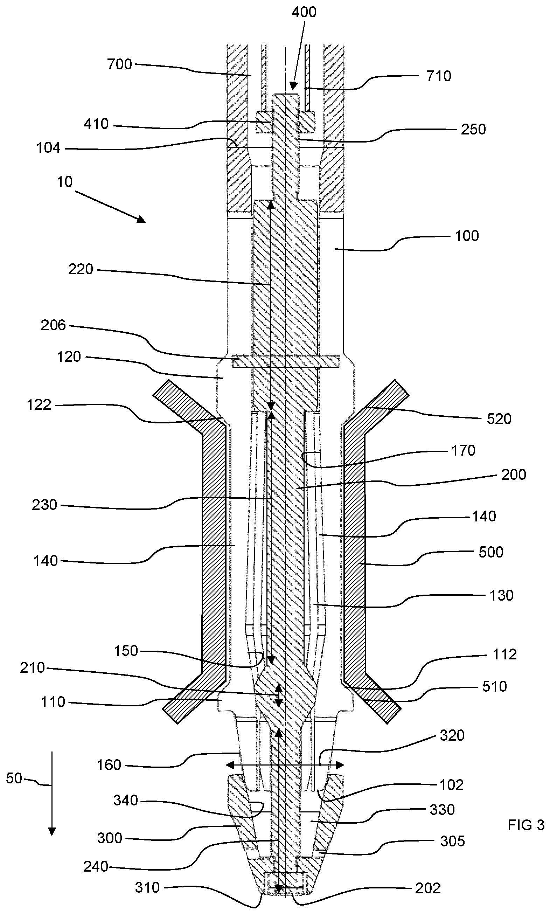

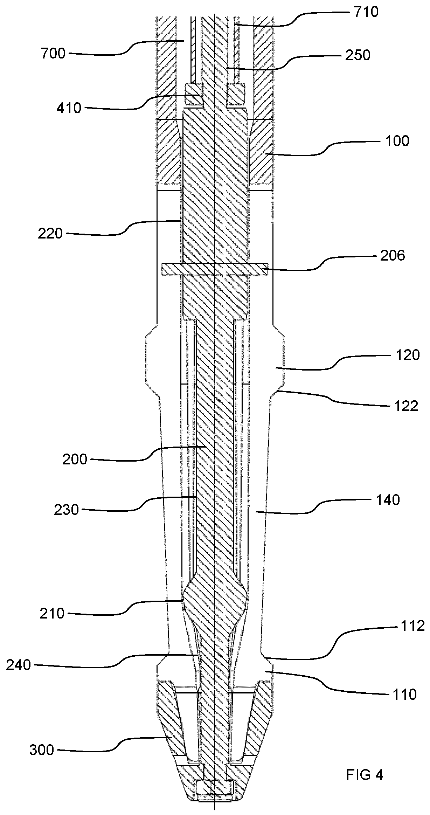

FIGs 1 and 2 are diagrammatic illustrations of an exemplary embodiment of a guide rod. FIG 1 illustrates the guide rod in its expanded state and FIG 2 illustrates the guide rod in its contracted state. The contracted state is used when the guide rod is inserted into the receptacle, and once in the receptacle the guide rod is expanded to lock into the receptacle. FIG 3 illustrates a view taken along a cut along the axis of the guide rod in FIG 1. FIG 4 illustrates a view taken along a cut along the axis of the guide rod in FIG 2. FIGs 1 to 4 illustrate not the entire guide rod, just the front end, the lower end, of the guide rod that is to be placed into a receptacle.

According to one embodiment, a guide rod, for guiding two subsea components together is illustrated in FIGs 1 to 4. The guide rod 10 is able to be both inserted and locked into a receptacle 20 on one 30 of the two subsea components. The guide rod comprises and element 100, a wedge 200, a cone 300, and a mechanism 400 for moving the wedge 200 axially relative to the element 100.

The element 100 is substantially hollow and cylindrical. The element 100 comprises a first circumferential shoulder 110 towards a first end 102, a second circumferential shoulder 120 towards an opposite second end 104, and a plurality of openings 130. Each opening 130 extends radially through the element 100 and extends axially along the element 100 opening up the element 100 from the first end 102 to, and including, the second circumferential shoulder 120. The plurality of openings 130 form elongate flexible sections 140 of the element 100. The plurality of openings 130 extend through the first circumferential shoulder 110. The plurality of openings 130 may start with a partly circular opening and extend in the axial direction through both the first and second circumferential shoulders 110 and 120 and extend in the axial direction along the rest of the element 100 in an insertion direction 50 of the guide rod 10. The plurality of openings 130 open up the first end 102 as illustrated in FIGs 1 to 4.

The wedge 200 is inside the element 100 and the wedge 200 is substantially cylindrical. The wedge 200 comprises a cone shaped section 210. The wedge 200 is restricted from rotating relative to the element 100. The wedge 200 comprises an end 202, which is outside of the element 100. The cone shaped section 210 may be a truncated cone shaped section 210. For example, a pin 206 going through the centre of the wedge 200 may extend into one, or two, of the plurality of opening 130, and in this way the wedge 200 may be restricted from rotating relative to the element 100.

The cone 300 is connected to the end 202 of the wedge 200. The cone 300 is cone shaped with a vertex 310 pointing away from the element 100. That is, the pointed top of the cone points in the insertion direction 50, and the base of the cone 300 faces the element 100.

The mechanism 400 is for moving the wedge 200 axially relative to the element 100 in the insertion direction 50, and opposite the insertion direction 50, of the guide rod 10. That is, the mechanism 400 can move the wedge 200 axially relative to the element 100 to the left and to the right in FIGs 1-4. This will, as further explained below, move the flexible sections 140 inwards so that the guide rod may be inserted into a receptacle, and move the flexible sections 140 outwards so that the guide rod 10 may be locked in the receptacle 20.

According to one embodiment, the mechanism 400 may be configured to move the wedge 200 in the insertion direction 50 and thereby move the cone 300 in the insertion direction 50 and at the same time move the elongate flexible sections 140 outward with the wedge 200. In this way the mechanism 400 may lock the guide rod 10 into the receptacle 20. In this position the elongate flexible sections 140 are in their outmost position, as illustrated in FIGs 1 and 3. The mechanism 400 may also be configured to move the wedge 200 opposite the insertion direction 50 and thereby move the cone 300 towards and over at least a part of the elongate flexible sections 140 thereby forcing the elongate flexible sections 140 inwards, together, and at the same time move the wedge 200 to allow the elongate flexible sections 140 to move inwards, together. In this way the mechanism 400 may reduce the diameter of the end of the guide rod 10 so that it can enter the receptacle 20. In this position the elongate flexible sections 140 are in their innermost position, as illustrated in FIGs 2 and 4.

According to one embodiment the element 100 may be configured to have no internal stress when the elongate flexible sections 140 have been moved to their outmost position with the wedge 200. This outmost position is the end position, the position where the guide rod 10 is locked with the receptacle 20. This position is illustrated in FIGs 1 and 3. At this position the element 100 has no internal stress, it has no load and no internal load or pressure. When the guide rod 10 is locked in the receptacle 20, then there is no load on the element 100. The element 100, the elongate flexible sections 140, just closes any gaps between the element 100 and the receptacle 20. The fit of the guide rod in the receptacle may be a location fit, a transition fit, according to the ISO standard of engineering fits. That is, the receptacle may be fractionally smaller than the element 100 of the guide rod and mild force may exist between the two. The standard tolerance between the two may for example be H7/h6, K7/h6, H7/n6, and/or N7/h6. The element 100 may be locked into the receptacle 20 to eliminate any space between the two without stress. The element 100 may be held nominally in the receptacle 20. However, because of any tolerances between the two there may be some minor stress, but this would not be any significant stress to consider. This allows the locked in guide rod to take up extra large forces, and transfer these forces to the ground, rather than the wellhead.

According to one embodiment the wedge 200 may be pushed to put some stress on the elongate flexible sections 140. The wedge 200 may be pushed downwards, towards the cone 300, just a bit to eliminate any space between the elongate flexible sections 140 and the receptacle 20. In this case there is no stress, no significant stress, between the two. This kind of locking allows the guide rod to take up large forces when later guiding a subsea component. For example, the guide rod may support and guide a BOP onto a wellhead and the forces, for example the forces when the BOP locks onto the guide rod, may be then transferred into the foundation and the bottom of the sea, instead of to the wellhead. In other embodiment, the wedge 200 may be pushed downwards with some force to create contact stress between the element 100 and the receptacle 20.

According to one embodiment, the element 100 may comprise an inner cone shaped surface 150, an outer cone shaped surface 160, and an inner straight section 170. The outer cone shaped surface 160 may be at the first end 102 of the element 100 facing the direction of insertion 50. The inner straight section 170 may be at, towards, the second end 104 of the element 100. The inner cone shaped surface 150 is, when viewed in the axial direction, between the outer cone shaped surface 160 and the inner straight section 170. This is best illustrated in FIGs 3 and 4.

According to one embodiment, the first circumferential shoulder 110 may comprise a first truncated cone shaped surface 112, and the second circumferential shoulder 120 comprises a second truncated cone shaped surface 122. The first truncated cone shaped surface 112 and the second truncated cone shaped surface 122 may face each other. This may best be taken from FIGs 1 to 4. The first truncated cone shaped surface 112 and the second truncated cone shaped surface 122 may be circumferential. The plurality of openings 130 may extend through both the truncated cone shaped surfaces 112 and 122. The plurality of openings 130 may start in the second truncated cone shaped surface 122 and extend through the first truncated cone shaped surfaces 112 to the first end 102. In this way the second truncated cone shaped surface 122 may land on the receptacle 20 and the first truncated cone shaped surface 112 may be enlarged, or reduced, circumferentially and radially, to allow the guide rod to be locked into the receptacle 20.

According to one embodiment, the cone 300 may comprise a hollow space 330 for at least a part of the elongate flexible sections 140 of the element 100. The cone 300 may comprise an inner cone shaped surface 340 that is always around at least a part of the elongate flexible sections 140, when view in the radial direction. This may allow the inner cone shaped surface 340 to force the elongate flexible sections 140 together in the hollow space 330. When the cone 300 is pulled in the opposite direction of the insertion direction 50 by the mechanism 400, then the inner cone shaped surface 340 engages the ends of the elongate flexible sections 140 and forces them to move inwards, together. When doing so, stress is put onto the elongate flexible sections 140. A base 320 of the cone 300 has a diameter that is smaller than a largest diameter of the element 100. This allows the cone 300 to easily enter the receptacle 20 and guide the guide rod 10 with the element 100 into the receptacle 20. The cone 300 may be a right circular cone, a truncated cone, a frustum, and/or a hollow cone.

According to one embodiment, the mechanism 400 may comprise an internal thread 410 interacting with an external thread 250 on the wedge 200. The mechanism 400 may comprise an internal thread 410 interacting with an external thread 250 connected to the wedge 200. The mechanism 400 may for example comprise a saddle nut around a threaded spindle on, or connected to, the wedge 200. The mechanism may comprise an electric motor. An external connection may be made for providing rotational movement to the mechanism 400.

According to one embodiment, the wedge 200 may comprise a straight section 220, a middle section 230, the cone shaped section 210, and an end section 240. The a diameter of the straight section 220 may be constant and may be larger than a diameter of the middle section 230. The diameter of the middle section 230 may be larger than a diameter of the end section 240. The cone shaped section 210 may have a base diameter that corresponds to the diameter of the middle section 230 and a vertex diameter that corresponds to the diameter of the end section 240. The end section 240 may comprise the end 202 of the wedge 200. This is best illustrated in FIGs 3 and 4.

According to one embodiment, the plurality of openings may extend axially along the element 100 from the first end 102, through the first circumferential shoulder 110, through the second circumferential shoulder 120, and beyond the second circumferential shoulder 120. In this way the element 100 may allow the elongate flexible sections 140 of the element 100 to be moved inwards together by the cone 300, as well as be moved outwards by the wedge 200.

According to one embodiment, a cover may arranged on the cone 300 to prevent dirt to enter into the cone 300. The cover 300 may extend from the cone 300 to the element 100. The cover may be circumferentially around the guide rod. The cover may cover the entire cone 300 and only parts of the element 100. The cover may prevent dirt, such as mud, to enter into the hollow cone and thereby prevent that the ends of the elongate flexible sections 140 can move inwards, together.

According to one embodiment, the cone 300 may comprise a cone opening 305, or a plurality of cone openings 305. The cone opening 305 may be close to the vertex 310 of the cone. The cone opening 305 may allow matters, for example dirt, that has entered the cone 300 to escape the cone 300 through the cone opening 305.

According to one embodiment, the guide rod may further comprise an elongate guiding member 700. The guiding member 700 may be hollow with a drive shaft 710 inside for the mechanism 400. The guide member 700 may be part of the element 100. The guide member 700 may be axially connected to the element 100. In this way the mechanism 400 may be activated from the axial end opposite the insertion direction of the guide rod by, for example, turning the drive shaft 710 inside the guide member 700 and thereby rotating the mechanism 400 and moving the wedge 200 relative to the element 100 and the guide member 700.

According to one embodiment, there are eight openings 130 and eight flexible sections 140. Having eight openings 130 provides a reliable movement of the flexible sections 140, while at the same time providing a reliable and robust hold of the guide rod in the receptacle when the flexible sections 140 are extended in the receptacle. An embodiment with six or seven or nine openings 130 and respective six or seven or nine flexible sections 140 would also be adequate, but would not provide a guide rod that is as reliable and robust as a guide rod with eight openings 130 and eight flexible sections 140.

According to one embodiment, each of the plurality of openings 130 has a width, in the circumferential direction, that is configured such that the final position of moving the flexible sections 140 together by the cone 300 still allows for a space between the flexible sections 140. The element 100, the wedge 200 and the cone 300 may be made out of metal.

According to one embodiment, the plurality of the flexible sections 140 of the element 100 may move from a contracted position where the flexible sections 140 are held together by the cone 300, for being inserted into the receptacle 20, to an outer position where the flexible sections 140 are held outwards and stress free by the wedge 200. The diameter of the first circumferential shoulder 110 in the outer position may be about 110 to 125 percent of the diameter of the first circumferential shoulder 110 in the contracted position. While this range is adequate, a better performance is achieved with the diameter of the first circumferential shoulder 110 in the outer position being about 116 to 118 percent of the diameter of the first circumferential shoulder 110 in the contracted position.

According to one embodiment, the first circumferential shoulder 110 of the element 100 is radially within the inner cone shaped surface 150 of the element 100. In this way the guide rod is able to take up large forces. In addition, or separately, according to one embodiment, the circumferential shoulder 120 of the element 100 is radially within the straight section 220 of the wedge 200, when the wedge is in its end position towards the insertion direction, i.e. in the position where the guide rod 10 is locked into the receptacle 20. In this way the guide rod is able to take up large forces.

According to one embodiment, the pin 206 going through the centre of the wedge 200 may extend into three or four of the plurality of opening 130. The pin 206 may take up less than half the width in one of the plurality of opening 130. The pin 206 may be positioned closer to the second circumferential shoulder 120 than to the first circumferential shoulder 110, in one of the plurality of opening 130. In this way the pin 206 may not interfere when the wedge 200 moves the flexible sections 140 together.

According to one embodiment, a subsea component comprises the guide rod 10 according to any one of the preceding embodiments. The subsea component may be a wellhead where the guide rod has been placed into a receptacle of the wellhead. The subsea component may be a remotely operated vehicle, ROV, that installs a guide rod.

According to one embodiment, a combination of the guide rod 10, according to any one of the preceding embodiments of the guide rod, and the receptacle 20, on one 30 of the two subsea components, is disclosed. The receptacle 20 comprises a substantially hollow cylinder 500 with a first circumferential shoulder 510 of the receptacle 20 and a second circumferential shoulder 520 of the receptacle 20. The first circumferential shoulder 510 of the receptacle 20 and the second circumferential shoulder 520 of the receptacle 20 are complementary in shape to engage the first circumferential shoulder 110 and the second circumferential shoulder 120, respectively. The second circumferential shoulder 520 of the receptacle 20 engages the second circumferential shoulder 120 when the guide rod 10 lands on the receptacle 20. The first circumferential shoulder 510 of the receptacle 20 engages the first circumferential shoulder 110 when the elongate flexible sections 140 are extended into the outward position by the movement of the wedge 200. An inner diameter of the hollow cylinder 500 is smaller than an outer diameter of the second circumferential shoulder 120.

According to one embodiment, the hollow cylinder 500, the first circumferential shoulder 510 of the receptacle 20, and the second circumferential shoulder 520 of the receptacle 20 may be fitted in form to the element 100 with the first circumferential shoulder 110 and the second circumferential shoulder 120. Fitted in form means that their shapes are complementary in form, designed to fit snugly to each other. The hollow cylinder 500, the first circumferential shoulder 510 of the receptacle 20, and the second circumferential shoulder 520 of the receptacle 20 may be close fitted in form to the element 100 with the first circumferential shoulder 110 and the second circumferential shoulder 120.

According to one embodiment, the combination may be configured such that when the guide rod 10 is locked in the receptacle 20 then there is no clearance between the two. The guide rod 10 and the receptacle 20 are complementary in form, designed to fit each other snugly, such that there is no clearance, no space, between them.

According to one embodiment, the combination may be configured such that when the guide rod 10 is locked in the receptacle 20 then the element 100 and the receptacle are free from stress from each other due to the locking. When the guide rod 10 is held in the receptacle 20 then there is no clamping force between them because the guide rod 10 is being held in the receptacle 20. Forces may be put onto the combination of the guide rod 10 and the receptacle 20 from the outside, but the locking of the guide rod 10 into the receptacle 20 creates no forces or stress on the guide rod 10 or on the receptacle 20. This allows the guide rod 10 and the receptacle 20 to take up large external forces.

According to one embodiment, the element 100, the wedge 200, and the cone 300 may all be arranged co-axially. The mechanism 400 may also be arranged co-axially. The cone 300 may be only connected to the end 202 of the wedge 200. The cone may be connected to rotate together with the wedge 200, or may be connected to not rotate with the wedge 200.

According to one embodiment, the element 100 according to any one of the preceding embodiment may have an axial length measured between the second circumferential shoulder 120 and the first end 102 that is two to four times, preferably about three times, the diameter of the second circumferential shoulder 120. The range one and a half to five times would also work, but the range two to four times has shown to produce the best holding of the guide rod 10 in the receptacle 20 and allows large external forces to be act on the guide rod 10.

The guide rod according to one or more embodiments as described above is able to take up large forces. The locking of the guide rod 10 to the receptacle 20 does not create, transmit, large forces to the receptacle 20 due to the features of the locking mechanism. By having the elongate flexible sections 140 in their neutral state, without stress, during locking and rather temporarily deform during insertion into the receptacle 20, the least amount of stresses are applied on the locked guide rod 10 by the locking itself. One or more embodiments disclosed herein provide guide rods 10 that are able to be locked into receptacles 20 that are on the foundation for the wellhead. Guiding the BOP onto the wellhead using such guide rods would allow the BOP to be able to lock relative the guide rods when in position, thereby also supporting the BOP. At least an amount of the forces from the BOP, created due to external influence on the BOP, would therefore have the possibility to go through the foundation and into the ground and not affect the wellhead.

### List of elements

- 10: guide rod
- 20: receptacle
- 30: one of two subsea components
- 50: insertion direction
- 100: element
- 102: first end, of the element
- 104: opposite second end, of the element
- 110: first circumferential shoulder
- 112: first truncated cone shaped surface
- 120: second circumferential shoulder
- 122: second truncated cone shaped surface
- 130: plurality of openings
- 140: elongate flexible sections
- 150: inner cone shaped surface, of the element
- 160: outer cone shaped surface, of the element
- 170: inner straight section, of the element
- 200: wedge
- 202: end, of the wedge
- 210: cone shaped section, of the wedge
- 220: straight section, of the wedge
- 230: middle section, of the wedge
- 240: end section, of the wedge
- 250: external thread
- 300: cone
- 305: cone opening
- 310: vertex, of the cone
- 320: base, of the cone
- 330: hollow space, of the cone
- 340: inner cone shaped surface, of the cone
- 400: mechanism
- 410: internal thread
- 500: hollow cylinder
- 510: first circumferential shoulder, of the receptacle
- 520: second circumferential shoulder, of the receptacle

## Claims

1. A guide rod, for guiding two subsea components together, the guide rod (10) being able to be both inserted and locked into a receptacle (20) on one (30) of the two subsea components, the guide rod comprising
an element (100), the element (100) being substantially hollow and cylindrical;
a wedge (200), the wedge (200) being inside the element (100) and substantially cylindrical and comprising a cone shaped section (210); and
a mechanism (400) for moving the wedge (200) axially relative to the element (100) in an insertion direction (50), and opposite the insertion direction (50), of the guide rod;
**characterised in** the element (100) comprising a first circumferential shoulder (110) towards a first end (102), a second circumferential shoulder (120) towards an opposite second end (104), and a plurality of openings (130), each opening (130) extending radially through the element (100) and extending axially along the element (100) opening up the element (100) from the first end (102) to, and including, the second circumferential shoulder (120), the plurality of openings (130) forming elongate flexible sections (140) of the element (100), and extending through the first circumferential shoulder (110);
the wedge (200) being restricted from rotating relative to the element (100) and comprising an end (202) being outside of the element (100); and
a cone (300), the cone (300) being connected to the end (202) of the wedge (200), the cone (300) being cone shaped with a vertex (310) pointing away from the element (100), and the cone (300) comprises a hollow space (330) for at least a part of the elongate flexible sections (140) of the element (100).

2. The guide rod according to claim 1, wherein the mechanism (400) is configured to move the wedge (200) in the insertion direction (50) and thereby move the cone (300) in the insertion direction (50) and at the same time move the elongate flexible sections (140) outward with the wedge (200); and
wherein the mechanism (400) is configured to move the wedge (200) opposite the insertion direction (50) and thereby move the cone (300) towards and over at least a part of the elongate flexible sections (140) thereby forcing the elongate flexible sections (140) inwards and at the same time move the wedge (200) to allow the elongate flexible sections (140) to move inwards.

3. The guide rod according to claim 2, wherein the element (100) is configured to have no internal stress when the elongate flexible sections (140) have been moved to their outmost position with the wedge (200).

4. The guide rod according to any one of the preceding claims, wherein the element (100) comprises an inner cone shaped surface (150), an outer cone shaped surface (160), and an inner straight section (170);
wherein the outer cone shaped surface (160) is at the first end (102) of the element (100) facing the direction of insertion (50), the inner straight section (170) is towards the second end (104) of the element (100), and the inner cone shaped surface (150) is, viewed in the axial direction, between the outer cone shaped surface (160) and the inner straight section (170).

5. The guide rod according to any one of the preceding claims, wherein the first circumferential shoulder (110) comprises a first truncated cone shaped surface (112), and the second circumferential shoulder (120) comprises a second truncated cone shaped surface (122), the first truncated cone shaped surface (112) and the second truncated cone shaped surface (122) facing each other.

6. The guide rod according to any one of the preceding claims, wherein the cone (300) comprises an inner cone shaped surface (340) that is always around at least a part of the elongate flexible sections (140) to allow the inner cone shaped surface (340) to force the elongate flexible sections (140) together in the hollow space (330); and
wherein a base (320) of the cone (300) has a diameter that is smaller than a largest diameter of the element (100).

7. The guide rod according to any one of the preceding claims, wherein the mechanism (400) comprises an internal thread (410) interacting with an external thread (250) on, or connected to, the wedge (200).

8. The guide rod according to any one of the preceding claims, wherein the wedge (200) comprises a straight section (220), a middle section (230), the cone shaped section (210), and an end section (240);
wherein a diameter of the straight section (220) is constant and is larger than a diameter of the middle section (230);
wherein the diameter of the middle section (230) is larger than a diameter of the end section (240);
wherein the cone shaped section (210) has a base diameter that corresponds to the diameter of the middle section (230) and a vertex diameter that corresponds to the diameter of the end section (240); and
wherein the end section (240) comprises the end (202) of the wedge (200).

9. The guide rod according to any one of the preceding claims, wherein the plurality of openings (130) extend axially along the element (100) from the first end (102), through the first circumferential shoulder (110), through the second circumferential shoulder (120), and beyond the second circumferential shoulder (120).

10. The guide rod according to any one of the preceding claims, wherein a cover is arranged on the cone (300) to prevent debris to enter into the cone (300).

11. The guide rod according to any one of the preceding claims, wherein the guide rod further comprises an elongate guiding member (700), the guiding member (700) being hollow with a drive shaft (710) inside for the mechanism (400) and the guide member (700) being part of, or axially connected to, the element (100).

12. A combination of the guide rod (10) according to any one of the preceding claims 1 to 9 and the receptacle (20) on one (30) of the two subsea components, the receptacle (20) comprising a substantially hollow cylinder (500) with a first circumferential shoulder (510) of the receptacle (20) and a second circumferential shoulder (520) of the receptacle (20);
wherein the first circumferential shoulder (510) of the receptacle (20) and the second circumferential shoulder (520) of the receptacle (20) are complementary in shape to engage the first circumferential shoulder (110) and the second circumferential shoulder (120), respectively; and
wherein an inner diameter of the hollow cylinder (500) is smaller than an outer diameter of the second circumferential shoulder (120).

13. The combination according to claim 12, wherein the hollow cylinder (500), the first circumferential shoulder (510) of the receptacle (20), and the second circumferential shoulder (520) of the receptacle (20) are fitted in form to the element (100) with the first circumferential shoulder (110) and the second circumferential shoulder (120).

14. The combination according to claim 12 or 13, wherein the combination is configured such that when the guide rod (10) is locked in the receptacle (20) then there is no clearance between the two.

15. The combination according to any one of the preceding claims 12 to 14, wherein the combination is configured such that when the guide rod (10) is locked in the receptacle (20) then the element (100) and the receptacle are free from stress from each other due to the locking.

## Patentansprüche

1. Eine Führungsstange zum Zusammenführen von zwei Unterwasserkomponenten, wobei die Führungsstange (10) sowohl in eine Aufnahme (20) an einer (30) der beiden Unterwasserkomponenten eingesetzt als auch in dieser verriegelt werden kann, wobei die Führungsstange Folgendes beinhaltet:
ein Element (100), wobei das Element (100) im Wesentlichen hohl und zylindrisch ist;
einen Keil (200), wobei sich der Keil (200) innerhalb des Elements (100) befindet und im Wesentlichen zylindrisch ist und einen kegelförmigen Abschnitt (210) beinhaltet; und
einen Mechanismus (400) zum axialen Bewegen des Keils (200) relativ zu dem Element (100) in einer Einsetzrichtung (50) und entgegengesetzt zur Einsetzrichtung (50) der Führungsstange;
**dadurch gekennzeichnet, dass** das Element (100) eine erste umlaufende Schulter (110) in Richtung eines ersten Endes (102) hin, eine zweite umlaufende Schulter (120) in Richtung eines gegenüberliegenden zweiten Endes (104) hin und eine Mehrzahl von Öffnungen (130) beinhaltet, wobei sich jede Öffnung (130) radial durch das Element (100) erstreckt und sich axial entlang des Elements (100) erstreckt, wodurch das Element (100) vom ersten Ende (102) bis zu der zweiten umlaufenden Schulter (120) einschließlich geöffnet ist, wobei die Mehrzahl von Öffnungen (130) längliche flexible Abschnitte (140) des Elements (100) bildet und sich durch die erste umlaufende Schulter (110) erstreckt;
wobei der Keil (200) daran gehindert ist, sich relativ zu dem Element (100) zu drehen, und ein Ende (202) beinhaltet, das sich außerhalb des Elements (100) befindet; und
einen Kegel (300), wobei der Kegel (300) mit dem Ende (202) des Keils (200) verbunden ist, wobei der Kegel (300) kegelförmig ist und eine Spitze (310), die von dem Element (100) weg zeigt, aufweist, und der Kegel (300) einen Hohlraum (330) für mindestens einen Teil der länglichen flexiblen Abschnitte (140) des Elements (100) beinhaltet.

2. Führungsstange gemäß Anspruch 1, wobei der Mechanismus (400) konfiguriert ist, um den Keil (200) in der Einsetzrichtung (50) zu bewegen und dadurch den Kegel (300) in der Einsetzrichtung (50) zu bewegen und gleichzeitig die länglichen flexiblen Abschnitte (140) mit dem Keil (200) nach außen zu bewegen; und
wobei der Mechanismus (400) konfiguriert ist, um den Keil (200) entgegengesetzt zur Einsetzrichtung (50) zu bewegen und dadurch den Kegel (300) in Richtung und über mindestens einen Teil der länglichen flexiblen Abschnitte (140) zu bewegen, wodurch die länglichen flexiblen Abschnitte (140) nach innen gezwungen werden, und gleichzeitig der Keil (200) zu bewegen, um zu ermöglichen, dass sich die länglichen flexiblen Abschnitte (140) nach innen bewegen.

3. Führungsstange gemäß Anspruch 2, wobei das Element (100) konfiguriert ist, um keine innere Spannung zu haben, wenn die länglichen flexiblen Abschnitte (140) mit dem Keil (200) in ihre äußerste Position bewegt wurden.

4. Führungsstange gemäß einem der vorhergehenden Ansprüche, wobei das Element (100) eine innere kegelförmige Oberfläche (150), eine äußere kegelförmige Oberfläche (160) und einen inneren geraden Abschnitt (170) beinhaltet;
wobei sich die äußere kegelförmige Oberfläche (160) an dem ersten Ende (102) des Elements (100) befindet, das der Einsetzrichtung (50) zugewandt ist, sich der innere gerade Abschnitt (170) in Richtung des zweiten Endes (104) des Elements (100) befindet und sich die innere kegelförmige Oberfläche (150), in der axialen Richtung betrachtet, zwischen der äußeren kegelförmigen Oberfläche (160) und dem inneren geraden Abschnitt (170) befindet.

5. Führungsstange gemäß einem der vorhergehenden Ansprüche, wobei die erste umlaufende Schulter (110) eine erste kegelstumpfförmige Oberfläche (112) beinhaltet und die zweite umlaufende Schulter (120) eine zweite kegelstumpfförmige Oberfläche (122) beinhaltet, wobei die erste kegelstumpfförmige Oberfläche (112) und die zweite kegelstumpfförmige Oberfläche (122) einander zugewandt sind.

6. Führungsstange gemäß einem der vorhergehenden Ansprüche, wobei der Kegel (300) eine innere kegelförmige Oberfläche (340) beinhaltet, die sich immer um mindestens einen Teil der länglichen flexiblen Abschnitte (140) befindet, um es der inneren kegelförmigen Oberfläche (340) zu ermöglichen, die länglichen flexiblen Abschnitte (140) in dem Hohlraum (330) zusammenzudrücken; und
wobei eine Basis (320) des Kegels (300) einen Durchmesser aufweist, der kleiner als ein größter Durchmesser des Elements (100) ist.

7. Führungsstange gemäß einem der vorhergehenden Ansprüche, wobei der Mechanismus (400) ein Innengewinde (410) beinhaltet, das mit einem an dem Keil (200) vorgesehenen oder mit diesem verbundenen Außengewinde (250) zusammenwirkt.

8. Führungsstange gemäß einem der vorhergehenden Ansprüche, wobei der Keil (200) einen geraden Abschnitt (220), einen mittleren Abschnitt (230), den kegelförmigen Abschnitt (210) und einen Endabschnitt (240) beinhaltet;
wobei ein Durchmesser des geraden Abschnitts (220) konstant ist und größer als ein Durchmesser des mittleren Abschnitts (230) ist;
wobei der Durchmesser des mittleren Abschnitts (230) größer als ein Durchmesser des Endabschnitts (240) ist;
wobei der kegelförmige Abschnitt (210) einen Basisdurchmesser, der dem Durchmesser des mittleren Abschnitts (230) entspricht, und einen Spitzendurchmesser, der dem Durchmesser des Endabschnitts (240) entspricht, aufweist; und
wobei der Endabschnitt (240) das Ende (202) des Keils (200) beinhaltet.

9. Führungsstange gemäß einem der vorhergehenden Ansprüche, wobei sich die Mehrzahl von Öffnungen (130) axial entlang des Elements (100) von dem ersten Ende (102), durch die erste umlaufende Schulter (110), durch die zweite umlaufende Schulter (120) und über die zweite umlaufende Schulter (120) hinaus erstreckt.

10. Führungsstange gemäß einem der vorhergehenden Ansprüche, wobei eine Abdeckung an dem Kegel (300) angeordnet ist, um zu verhindern, dass Schmutz in den Kegel (300) eintritt.

11. Führungsstange gemäß einem der vorhergehenden Ansprüche, wobei die Führungsstange ferner ein längliches Führungselement (700) beinhaltet, wobei das Führungselement (700) hohl mit einer Antriebswelle (710) im Inneren für den Mechanismus (400) ist und das Führungselement (700) Teil des Elements (100) ist oder axial mit diesem verbunden ist.

12. Eine Kombination aus der Führungsstange (10) gemäß einem der vorhergehenden Ansprüche 1 bis 9 und der Aufnahme (20) an einer (30) der beiden Unterwasserkomponenten, wobei die Aufnahme (20) einen im Wesentlichen hohlen Zylinder (500) mit einer ersten umlaufenden Schulter (510) der Aufnahme (20) und einer zweiten umlaufenden Schulter (520) der Aufnahme (20) beinhaltet;
wobei die erste umlaufende Schulter (510) der Aufnahme (20) und die zweite umlaufende Schulter (520) der Aufnahme (20) hinsichtlich ihrer Form komplementär ausgebildet sind, um mit der ersten umlaufenden Schulter (110) bzw. der zweiten umlaufenden Schulter (120) in Eingriff zu gelangen; und
wobei ein innerer Durchmesser des hohlen Zylinders (500) kleiner als ein äußerer Durchmesser der zweiten umlaufenden Schulter (120) ist.

13. Kombination gemäß Anspruch 12, wobei der hohle Zylinder (500), die erste umlaufende Schulter (510) der Aufnahme (20) und die zweite umlaufende Schulter (520) der Aufnahme (20) der Form nach an das Element (100) mit der ersten umlaufenden Schulter (110) und der zweiten umlaufenden Schulter (120) angepasst sind.

14. Kombination gemäß Anspruch 12 oder 13, wobei die Kombination so konfiguriert ist, dass, wenn die Führungsstange (10) in der Aufnahme (20) verriegelt ist, kein Spiel zwischen den beiden besteht.

15. Kombination gemäß einem der vorhergehenden Ansprüche 12 bis 14, wobei die Kombination so konfiguriert ist, dass, wenn die Führungsstange (10) in der Aufnahme (20) verriegelt ist, das Element (100) und die Aufnahme aufgrund der Verriegelung frei von gegenseitiger Spannung sind.

## Revendications

1. Une tige-guide, pour guider deux composants sous-marins ensemble, la tige-guide (10) étant apte à être à la fois insérée et verrouillée dans un réceptacle (20) sur l'un (30) des deux composants sous-marins, la tige-guide comprenant
un élément (100), l'élément (100) étant substantiellement creux et cylindrique ;
un coin (200), le coin (200) étant à l'intérieur de l'élément (100) et substantiellement cylindrique et comprenant une section en forme de cône (210) ; et
un mécanisme (400) pour déplacer le coin (200) axialement par rapport à l'élément (100) dans une direction d'insertion (50), et dans le sens opposé à la direction d'insertion (50), de la tige-guide ;
**caractérisée en ce que** l'élément (100) comprend un premier épaulement circonférentiel (110) vers une première extrémité (102), un deuxième épaulement circonférentiel (120) vers une deuxième extrémité opposée (104), et une pluralité d'ouvertures (130), chaque ouverture (130) s'étendant radialement à travers l'élément (100) et s'étendant axialement le long de l'élément (100) en ouvrant l'élément (100) de la première extrémité (102) jusqu'au deuxième épaulement circonférentiel (120) inclus, la pluralité d'ouvertures (130) formant des sections flexibles allongées (140) de l'élément (100), et s'étendant à travers le premier épaulement circonférentiel (110) ;
le coin (200) étant restreint dans une rotation par rapport à l'élément (100) et comprenant une extrémité (202) qui est à l'extérieur de l'élément (100) ; et
un cône (300), le cône (300) étant raccordé à l'extrémité (202) du coin (200), le cône (300) étant en forme de cône avec un sommet (310) pointant dans le sens opposé à l'élément (100), et le cône (300) comprend un espace creux (330) pour au moins une partie des sections flexibles allongées (140) de l'élément (100).

2. La tige-guide selon la revendication 1, où le mécanisme (400) est configuré pour déplacer le coin (200) dans la direction d'insertion (50) et de ce fait déplacer le cône (300) dans la direction d'insertion (50) et en même temps déplacer les sections flexibles allongées (140) vers l'extérieur avec le coin (200) ; et
où le mécanisme (400) est configuré pour déplacer le coin (200) dans le sens opposé à la direction d'insertion (50) et de ce fait déplacer le cône (300) vers et par-dessus au moins une partie des sections flexibles allongées (140) forçant de ce fait les sections flexibles allongées (140) vers l'intérieur et en même temps déplacer le coin (200) pour permettre aux sections flexibles allongées (140) de se déplacer vers l'intérieur.

3. La tige-guide selon la revendication 2, où l'élément (100) est configuré pour n'avoir aucune contrainte interne lorsque les sections flexibles allongées (140) ont été déplacées jusqu'à leur position la plus à l'extérieur avec le coin (200).

4. La tige-guide selon l'une quelconque des revendications précédentes, où l'élément (100) comprend une surface en forme de cône interne (150), une surface en forme de cône externe (160), et une section droite interne (170) ;
où la surface en forme de cône externe (160) se situe au niveau de la première extrémité (102) de l'élément (100) faisant face à la direction d'insertion (50), la section droite interne (170) se situe vers la deuxième extrémité (104) de l'élément (100), et la surface en forme de cône interne (150) se situe, vue dans la direction axiale, entre la surface en forme de cône externe (160) et la section droite interne (170).

5. La tige-guide selon l'une quelconque des revendications précédentes, où le premier épaulement circonférentiel (110) comprend une première surface en forme de cône tronqué (112), et le deuxième épaulement circonférentiel (120) comprend une deuxième surface en forme de cône tronqué (122), la première surface en forme de cône tronqué (112) et la deuxième surface en forme de cône tronqué (122) se faisant face.

6. La tige-guide selon l'une quelconque des revendications précédentes, où le cône (300) comprend une surface en forme de cône interne (340) qui est toujours autour d'au moins une partie des sections flexibles allongées (140) pour permettre à la surface en forme de cône interne (340) de forcer les sections flexibles allongées (140) ensemble dans l'espace creux (330) ; et
où une base (320) du cône (300) a un diamètre qui est plus petit qu'un diamètre le plus grand de l'élément (100).

7. La tige-guide selon l'une quelconque des revendications précédentes, où le mécanisme (400) comprend un filetage interne (410) interagissant avec un filetage externe (250) sur le, ou raccordé au, coin (200).

8. La tige-guide selon l'une quelconque des revendications précédentes, où le coin (200) comprend une section droite (220), une section médiane (230), la section en forme de cône (210), et une section d'extrémité (240) ;
où un diamètre de la section droite (220) est constant et est plus grand qu'un diamètre de la section médiane (230) ;
où le diamètre de la section médiane (230) est plus grand qu'un diamètre de la section d'extrémité (240) ;
où la section en forme de cône (210) a un diamètre de base qui correspond au diamètre de la section médiane (230) et un diamètre de sommet qui correspond au diamètre de la section d'extrémité (240) ; et
où la section d'extrémité (240) comprend l'extrémité (202) du coin (200).

9. La tige-guide selon l'une quelconque des revendications précédentes, où la pluralité d'ouvertures (130) s'étendent axialement le long de l'élément (100) depuis la première extrémité (102), à travers le premier épaulement circonférentiel (110), à travers le deuxième épaulement circonférentiel (120), et au-delà du deuxième épaulement circonférentiel (120).

10. La tige-guide selon l'une quelconque des revendications précédentes, où un couvercle est agencé sur le cône (300) pour empêcher des débris d'entrer dans le cône (300).

11. La tige-guide selon l'une quelconque des revendications précédentes, où la tige-guide comprend en outre un élément de guidage (700) allongé, l'élément de guidage (700) étant creux avec un arbre d'entraînement (710) à l'intérieur pour le mécanisme (400) et l'élément de guidage (700) faisant partie de, ou étant raccordé axialement à, l'élément (100).

12. Une combinaison de la tige-guide (10) selon l'une quelconque des revendications précédentes 1 à 9 et du réceptacle (20) sur l'un (30) des deux composants sous-marins, le réceptacle (20) comprenant un cylindre substantiellement creux (500) avec un premier épaulement circonférentiel (510) du réceptacle (20) et un deuxième épaulement circonférentiel (520) du réceptacle (20) ;
où le premier épaulement circonférentiel (510) du réceptacle (20) et le deuxième épaulement circonférentiel (520) du réceptacle (20) sont de forme complémentaire pour mettre en prise le premier épaulement circonférentiel (110) et le deuxième épaulement circonférentiel (120), respectivement ; et
où un diamètre interne du cylindre creux (500) est plus petit qu'un diamètre externe du deuxième épaulement circonférentiel (120).

13. La combinaison selon la revendication 12, où le cylindre creux (500), le premier épaulement circonférentiel (510) du réceptacle (20), et le deuxième épaulement circonférentiel (520) du réceptacle (20) sont ajustés en forme à l'élément (100) avec le premier épaulement circonférentiel (110) et le deuxième épaulement circonférentiel (120).

14. La combinaison selon la revendication 12 ou 13, où la combinaison est configurée de telle sorte que lorsque la tige-guide (10) est verrouillée dans le réceptacle (20) alors il n'y a pas de jeu entre les deux.

15. La combinaison selon l'une quelconque des revendications précédentes 12 à 14, où la combinaison est configurée de telle sorte que lorsque la tige-guide (10) est verrouillée dans le réceptacle (20) alors l'élément (100) et le réceptacle sont exempts de contrainte l'un de l'autre en raison du verrouillage.
